# EUROPEAN PATENT SPECIFICATION

(11) **EP 1 283 009 B1**
(45) Date of publication and mention of the grant of the patent: **02.07.2008**
(21) Application number: 01922027.6
(22) Date of filing: 23.04.2001
(51) Int. Cl.: A01N 43/40, A01N 25/04, A01N 25/30

(54) **INSECTICIDAL AND ACARICIDAL COMPOSITION**
INSEKTZIDE UND AKARIZIDE ZUSAMMENSETZUNG
COMPOSITION INSECTICIDE ET ACARICIDE

(30) Priority: 28.04.2000 JP 2000130345
(43) Date of publication of application: 12.02.2003
(73) Proprietor: Sumitomo Chemical Company, Limited, Tokyo 104-8260 (JP)
(72) Inventor: UEDA, Nobuhito, Nishinomiya-shi, Hyogo 662-0815 (JP)
(74) Representative: Hubert, Philippe
(86) International application number: PCT/JP2001/003483
(87) International publication number: WO 2001/082700

(56) References cited:
- EP-A1- 0 485 207
- EP-A2- 0 083 437
- WO-A1-00/72680
- WO-A1-01/00027
- WO-A1-96/11909
- JP-A- 7 017 810
- JP-A- 8 319 201
- JP-A- 9 124 403
- JP-A- 9 194 418
- JP-A- 10 306 001
- JP-A- 10 310 501
- JP-A- 11 349 413
- JP-A- 2000 053 508
- JP-A- 2000 095 612
- JP-A- 2000 108 104
- JP-A- 2000 159 614
- JP-A- 2000 169 305
- JP-A- 2000 355 507

## Description

### Technical Field

This invention relates to new insecticidal/acaricidal compositions.

### Background Arts

Many insecticidal/acaricidal compositions have been sold and used so far see US6248761 or US6221885. However, there are many types of insects and acarina to be controlled. Further, the insecticidal/acaricidal compositions used in a small amount are desired in view of environmental and economical problems in agricultural field. Therefore, the insecticidal/acaricidal compositions having excellent insecticidal/acaricidal efficacy have been desired. Furthermore, the stability of the formulations (e.g. stability and uniformity of the insecticidal/acaricidal ingredients in the formulation) is also desired in formulated insecticidal/ acaricidal compositions for providing sufficient insecticidal/acaricidal effect.

### Disclosure of the Invention

The present inventor has earnestly studied and found that the composition comprising a specific dihalopropene compound, a dispersant having 40 dyne/cm or more of surface tension at 1% by weight of its aqueous solution, an organic compound, which is liquid at ordinary temperature and has 1g or less solubility against 100g of water at 20°C, and water provides excellent insecticidal/acaricidal effect. As a result, the present invention has been accomplished.

Namely, the present invention provides an insecticidal/acaricidal composition (hereinafter, referred to as the present composition) comprising a dihalopropene compound (hereinafter, referred to as the present compound) given by formula: 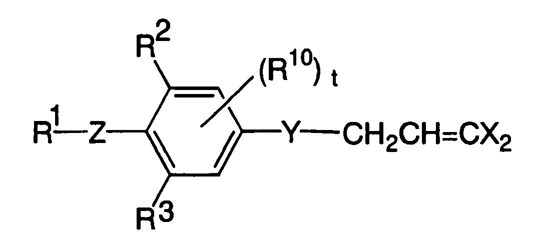 wherein, Z represents an oxygen atom, sulfur atom or NR⁴ group (wherein R⁴ is a hydrogen atom or C1-3 alkyl group), Y represents an oxygen atom, sulfur atom or NH group, X's independently represent a chlorine or bromine atom, R², R³ and R¹⁰ independently represent a halogen atom, C1-3 haloalkyl group or C1-3 alkyl group, t represents an integer of 0 to 2 and R¹ represents Q₁, Q₂, Q₃, Q₄, Q₅, Q₆ or Q₇ of formula: 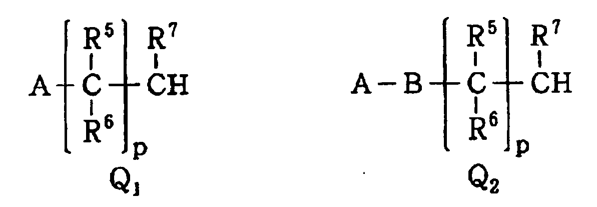 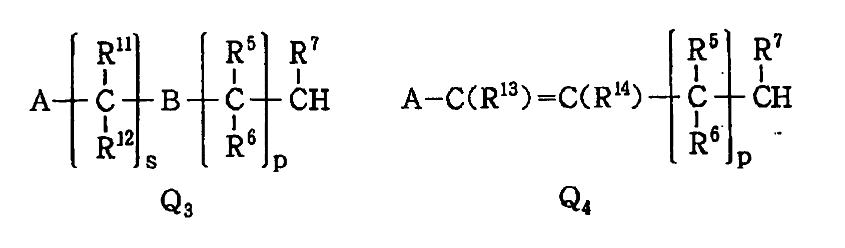 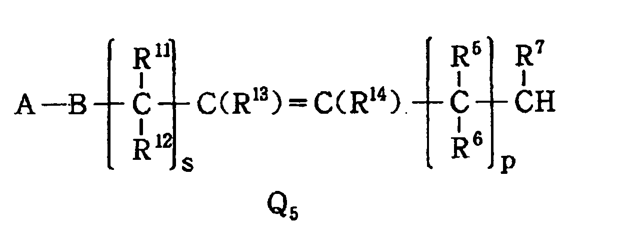 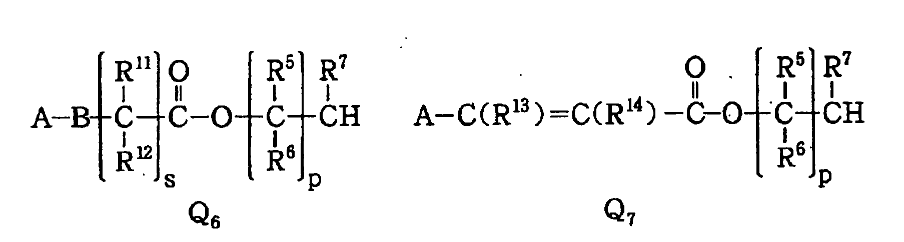 wherein, A represents an optionally substituted heterocyclic group, B represents an oxygen atom, S(O)_{q} group, NR⁹ group, C(=G¹)G² group or G¹C(=G²) group, q represents an integer of 0 to 2, R⁹ represents a hydrogen atom, acetyl group or C1-3 alkyl group, G¹ and G² independently represent an oxygen or sulfur atom, R⁵, R⁶, R⁷, R¹¹ and R¹² independently represent a hydrogen atom, C1-3 alkyl group or trifluoromethyl group, R¹³ and R¹⁴ independently represent a hydrogen atom, C1-3 alkyl group, trifluoromethyl group or halogen atom, p represents an integer of 0 to 6 and s represents an integer of 1 to 6,
a dispersant having 40 dyne/cm or more of surface tension at 1% by weight of its aqueous solution (hereinafter, referred to as the present dispersant), an organic compound, which is liquid at ordinary temperature and has 1g or less solubility against 100g of water at 20°C (hereinafter, referred to as the present solvent), and water.

### Best Mode for Carrying out the Invention

Examples of the heterocyclic group of "optionally substituted heterocyclic group" defined for the substituent A of the present compound include isoxazole, isothiazole, thiazole, 1,3,4-thiadiazole, pyrrole, furan, thiophene, pyrazole, imidazole, 1,2,3-triazole, 1,2,4-triazole, 1,2,3,4-tetrazole, pyridine, pyridazine, pyrimidine, pyrazine, 1,2,4-triazine, 1,3,5-triazine, indole, benzofuran, thianaphthalene, indazole, benzimidazole, benzotriazole, benzisoxazole, benzoxazole, benzothiazole, quinoline, isoquinoline, quinoxaline, quinazole, piperidine, piperazine, tetrahydrofuran, tetrahydropyran, pyrazoline, phthalimide, dioxane, dioxolane and benzodioxolane. The substituents which may be substituted on the heterocyclic group include (R⁸)ᵣ wherein R⁸ represents a halogen atom, nitro group, cyano group, C1-4 alkyl group, C1-3 haloalkyl group, C1-4 alkoxy group, C1-3 haloalkoxy group, C1-3 alkylthio group, C1-3 haloalkylthio group, C1-2 alkylsulfinyl group, C1-2 alkylsulfonyl group, C1-2 haloalkylsulfinyl group, C1-2 haloalkylsulfonyl group, C2-4 alkenyl group, C2-4 haloalkenyl group, C2-4 alkynyl group, C2-4 haloalkynyl group, amino group, dimethylamino group, acetamido group, acetyl group, haloacetyl group, formyl group, carboxyl group, methoxycarbonyl group, C3-6 cycloalkyl group, (C1-2 alkyl)aminocarbonyl group, [di(C1-2 alkyl)amino]carbonyl group, or phenyl, benzyl, phenoxy, benzyloxy or pyridyloxy group (the phenyl or pyridyl ring of these substituents may be substituted by a halogen atom, C1-4 alkyl group, C1-3 haloalkyl group, C1-4 alkoxy group or C1-4 haloalkoxy group), and r represents an integer of 0 to 7.

Among the present compounds, 3,5-dichloro-4-(3-(5-trifluoromethyl-2-pyridyloxy)propyloxy)-1-(3,3-dichloro-2-propenyloxy)benzene is preferable as an active ingredient of the present composition.

The present compounds can be prepared according to the description of JP hei9-151172A.

The present composition usually contains 0.1 to 40% by weight of the present compound, preferably 1 to 30% by weight, more preferably 2 to 20% by weight.

Examples of the present dispersants include natural products and their derivatives having sugar structure or alkyl structure in the main chain and having 1% by weight or more solubility against water at 20°C; synthetic polymer having 1% by weight or more solubility against water at 20°C; and protein having 1% by weight or more solubility against water at 20°C. Examples of the natural products and their derivatives having sugar structure or alkyl structure in the main chain and having 1% by weight or more solubility against water at 20°C include gum arabic, pectin, xanthan gum, locust gum, alginic acid and its salts, carboxymethylcellulose and its salts, and ligninsulfonates. Examples of the synthetic polymer having 1% by weight or more solubility against water at C include polyvinyl alcohol, polyvinyl methyl ether, polyethylene glycol, polyvinylpyrrolidone, hydroxypropylcellulose, hydroxypropylmethylcellulose and sodium polyacrylate. Examples of the protein having 1% by weight or more solubility against water at 20°C include gelatin, casein and protamine. The molecular weight of the present dispersant is not limited so long as it provides the present composition, and usually in the rage of 2,000 to 1,000,000, preferably 10,000 to 200,000 of average molecular weight. The viscosity of the present dispersant is usually 10,000 Pa-s or less, preferably 5,000 Pa·s or less at 20°C in 1% by weight of aqueous solution in view of easy handling. The present composition usually contains 0.1 to 20% by weight of the present dispersant, preferably 0.5 to 10% by weight, more preferably 1 to 5% by weight.

Examples of the present solvent include aromatic solvents, animal and vegetable oils, paraffin solvents and ester solvents. The aromatic solvents are exemplified by xylene, alkylbenzenes and alkylnaphthalenes. The animal and vegetable oils are exemplified by rape seed oil, soybean oil and linseed oil. The paraffin solvents are exemplified by C5 or more normal paraffin, C5 or more isoparaffin and C5 or more cycloparaffin. Among them, preferred are C5-70 normal paraffin, C5-200 isoparaffin and C5-200 cycloparaffin, and more preferred are C5-45 normal paraffin, C5-100 isoparaffin and C5-100 cycloparaffin. The ester solvents are exemplified by diisobutyl adipate, diisodecyl adipate, dialkyl phthalate (e.g. didecyl phthalate), octyl oleate, lauryl oleate, octyl dodecyl oleate and isopropyl myristate.

The present solvent can be used solely or as a mixture of two or more. In view of the insecticidal/acaricidal efficacy of the present composition, the mixed solvent of the paraffin solvent and the ester solvent or the aromatic solvent is preferably used. When the present composition comprising the mixed solvent of the paraffin solvent with the ester solvent as the present solvent and 3,5-dichloro-4-(3-(5-trifluoromethyl-2-pyridyloxy)propyloxy)-1-(3,3-dichloro-2-propenyloxy)benzene as the present compound is an emulsion (described below), the paraffin solvent is preferably cycloparaffin solvent.

The amount of the present solvent utilized for the present composition is designated in view of easiness of preparation, object of using the present composition and so on, and usually 0.5 to 50 parts by weight, preferably 1 to 30 parts by weight, more preferably 1.5 to 10 parts by weight based on 1 part by weight of the present compound.

Typical examples of the present solvent include Hisol SAS-296 (commercial name of Nippon Petrochemicals, mixture of 1-phenyl-1-xylylethane and 1-phenyl-1-ethylphenylethane), Hisol SAS-LH (commercial name of Nippon Petrochemicals), Shellsol A (commercial name of Shell Chemicals), Shellsol AB (commercial name of Shell Chemicals), Shellsol E (commercial name of Shell Chemicals), Shellsol R (commercial name of Shell Chemicals), Shellsol T (commercial name of Shell Chemicals), Shellsol D-70 (commercial name of Shell Chemicals), Cactus Solvent HP-MN (commercial name of Nikko Petrochemicals, containing 80% of methylnaphthalene), Cactus Solvent HP-DMN (commercial name of Nikko Petrochemicals, containing 80% of dimethylnaphthalene), Cactus Solvent P-100 (commercial name of Nikko Petrochemicals, C9-10 alkylbenzenes), Cactus Solvent P-150 (commercial name of Nikko Petrochemicals, alkylbenzene), Cactus Solvent P-180 (commercial name of Nikko Petrochemicals, mixture of methylnaphthalene and dimethylnaphthalene), Cactus Solvent P-200 (commercial name of Nikko Petrochemicals, mixture of methylnaphthalene and dimethylnaphthalene), Cactus Solvent P-220 (commercial name of Nikko Petrochemicals, mixture of methylnaphthalene and dimethylnaphthalene), Cactus Solvent PAD-1 (commercial name of Nikko Petrochemicals, dimethylmonoisopropylnaphthalene), Solvesso 100 (commercial name of Exxon-Mobil Chemicals, aromatic hydrocarbon), Solvesso 150 (commercial name of Exxon-Mobil Chemicals, aromatic hydrocarbon), Solvesso 200 (commercial name of Exxon-Mobil Chemicals, aromatic hydrocarbon), Suwasol 100 (commercial name of Maruzen Petrochemical, toluene), Suwasol 200 (commercial name of Maruzen Petrochemical, xylene), Vinycizer 20 (commercial name of Kao Corp., diisotridecyl phthalate), Vinycizer 40 (commercial name of Kao Corp., diisobutyl adipate), Vinycizer 50 (commercial name of Kao Corp., diisodecyl adipate), Vinycizer 85 (commercial name of Kao Corp., dialkyl phthalate), Vinycizer 105 (commercial name of Kao Corp., didecyl phthalate), Vinycizer 124 (commercial name of Kao Corp., dialkyl phthalate), Exceparl O-OL (commercial name of Kao Corp., octyl oleate), Exceparl L-OL (commercial name of Kao Corp., lauryl oleate), Exceparl OD-OL (commercial name of Kao Corp., octyl dodecyl oleate), Toxanon PP-1000 (commercial name of Sanyo Chemical, polyoxypropylene glycol), Nikkol IPA-A (commercial name of Nikko Chemicals, isopropyl myristate), Nikkol IPA-EX (commercial name of Nikko Chemicals, isopropyl myristate), Teclean N-30 (commercial name of Nippon Petrochemicals), Teclean N-32 (commercial name of Nippon Petrochemicals), Teclean N-33 (commercial name of Nippon Petrochemicals), Machine oil 46P (commercial name of Nichibeikoyu Co.), Pesticidal machine oil P (commercial name of Nichibeikoyu Co.), Pesticidal oil H (commercial name of Nichibeikoyu Co.), Super oil A (commercial name of Nichibeikoyu Co.), Super oil B (commercial name of Nichibeikoyu Co.), Super oil C (commercial name of Nichibeikoyu Co.), Super oil D (commercial name of Nichibeikoyu Co.), Super oil E (commercial name of Nichibeikoyu Co.), Super oil F (commercial name of Nichibeikoyu Co.), Spindle oil No. 1 (commercial name of Nichibeikoyu Co.), Spindle oil No. 2 (commercial name of Nichibeikoyu Co.), Machine oil B (commercial name of Nichibeikoyu Co.), Machine oil C (commercial name of Nichibeikoyu Co.), Napthtesol M (commercial name of Nippon Petrochemicals, paraffin solvent), Isosol 300 (commercial name of Nippon Petrochemicals), Isosol 400 (commercial name of Nippon Petrochemicals), Exxsol D-80 (commercial name of Exxon-Mobil Chemicals, mixed solvent of paraffin and cycloparaffin), Exxsol D-110 (commercial name of Exxon-Mobil Chemicals, mixed solvent of paraffin and cycloparaffin), Exxsol D-130 (commercial name of Exxon-Mobil Chemicals, mixed solvent of paraffin and cycloparaffin), Exxsol D-160 (commercial name of Exxon-Mobil Chemicals, mixed solvent of paraffin and cycloparaffin), Isopar E (commercial name of Exxon-Mobil Chemicals, kerosene), Isopar G (commercial name of Exxon-Mobil Chemicals, kerosene), Isopar H (commercial name of Exxon-Mobil Chemicals, kerosene), Isopar M (commercial name of Exxon-Mobil Chemicals, kerosene), Neotiosol (commercial name of Chuo Kasei, kerosene), IP Solvent 2028 (commercial name of Idemitsu Petrochemical, isoparaffin), IP Solvent 2835 (commercial name of Idemitsu Petrochemical, isoparaffin), Naplex 38 (commercial name of Idemitsu Petrochemical, naphthene), Whitelex 205 (commercial name of Exxon-Mobil Chemicals), Whitelex 207 (commercial name of Exxon-Mobil Chemicals), Whitelex 215 (commercial name of Exxon-Mobil Chemicals), Whitelex 247 (commercial name of Exxon-Mobil Chemicals), Whitelex 2210 (commercial name of Exxon-Mobil Chemicals), Whitelex 307 (commercial name of Exxon-Mobil Chemicals), Whitelex 309 (commercial name of Exxon-Mobil Chemicals), Whitelex 326 (commercial name of Exxon-Mobil Chemicals) and Whitelex 335 (commercial name of Exxon-Mobil Chemicals).

The present composition is a formulation wherein fine particles, which are essentially insoluble in water, are dispersed in an aqueous phase by the present dispersant. The present composition can be various type of formulations such as capsule suspension, capsule suspoemulsion, suspoemulsion and emulsion and so on.

The state of the capsule suspension is, for example, a state wherein capsulated droplets dissolving the present compound in the present solvent are suspended in an aqueous phase, or a state wherein capsulated droplets dispersing the present compound in the present solvent are suspended in an aqueous phase. The state of the capsule suspoemulsion is, for example, a state wherein the present solid or liquid compound is capsulated, the capsules are suspended in an aqueous phase, and the present solvent is emulsified in the aqueous phase. The state of the suspoemulsion is, for example, a condition wherein the present solid compound is suspended in an aqueous phase and the present solvent is emulsified in the aqueous phase, or a state wherein droplets suspending the present solid compound in the present solvent are emulsified in an aqueous phase. The state of the emulsion is, for example, a state wherein droplets containing the present compound and the present solvent are emulsified in an aqueous phase.

In the capsule suspension and capsule suspoemulsion of the present composition, the capsules (microcapsules) prepared the volume median diameter to usually 0.1-50µm, preferably 0.3-40µm, more preferably 0.5-30µ m, further more preferably 2-25µm, are dispersed in an aqueous phase containing the present dispersant. Examples of the wall substance forming the capsules include polyurea, polyurethane, polyamide, urea-formalin resin, melamine-formalin resin, gelatin, albumin and chitosan. The volume median diameter of the present solvent in the capsule suspoemulsion is usually 0.1-50µm, preferably 0.3-40µm, more preferably 0.5-30µm, further more preferably 2-25µm.

In the suspoemulsion of the present composition, fine droplets (emulsion particles) of the present solvent are emulsified in the aqueous phase and the present compound is dispersed in the emulsion particles or the aqueous phase. The volume median diameter of the present compound in the suspoemulsion is usually 0.1-50µm, preferably 0.3-40µm, more preferably 0.5-30µm, further more preferably 2-25µm.

In the emulsion of the present composition, fine droplets of a solution dissolving the present compound in the present solvent or fine droplets of a solution mixed the present compound with the present solvent are emulsified in the aqueous phase. The volume median diameter of the droplet is usually 0.1-50µm, preferably 0.3-40µm, more preferably 0.5-30µm, further more preferably 2-25µm.

The present composition optionally contains viscosity-adjusting agent and further surfactant, anti-foaming agent, anti-freezing agent, preservative, stabilizer, coloring agent, perfume, synergist, safener and so on.

The viscosity-adjusting agents are exemplified by natural polysaccharides such as xanthan gum, lamxan gum, locust bean gum, carrageenan and werant gum; synthetic polymers such as sodium polyacrylate; semi-synthetic polymers such as carboxymethylcellulose; mineral powders such as aluminum silicate, smectite, bentonite, hectorite and anhydrous silica; and alumina sol. Examples of the xanthan gum include Kelzan S (manufactured by Monsanto) and examples of the aluminum silicate include Veegum R (manufactured by Vanderbilt). Further, examples of the anhydrous silica include Aerosil 200 (manufactured by Degussa Huls) and examples of the mixture of anhydrous silica and alumina sol include Aerosil COK-84 (manufactured by Degussa Huls).

When the viscosity-adjusting agent is utilized, the amount is usually 0.01 to 10% by weight, preferably 0.1 to 5% by weight in the present composition.

Nonionic surfactants, anionic surfactants, cationic surfactants and zwitter ionic surfactants are utilized as a surfactant.

The nonionic surfactants are exemplified by sugar ester type nonionic surfactants, fatty acid ester ester type nonionic surfactants, vegetable oil type nonionic surfactants, alcohol type nonionic surfactants, alkylphenol type nonionic surfactants, polyoxyethylene-polyoxypropylene block polymer type nonionic surfactants, bisphenol type nonionic surfactants, polyaromatic type nonionic surfactants, silicone type nonionic surfactants and fluorinated type nonionic surfactants. Examples of the sugar ester type nonionic surfactant include sorbitan fatty acid esters, polyoxyethylene sorbitan fatty acid esters and sucrose fatty acid esters. Examples of the fatty acid ester ester type nonionic surfactant include polyoxyethylene fatty acid esters, polyoxyethylene resin acid esters and polyoxyethylene fatty acid diesters. Examples of the vegetable oil type nonionic surfactant include polyoxyethylene castor oil and polyoxyethylene hardened castor oil. Examples of the alcohol type nonionic surfactant include polyoxyethylenealkyl ethers. Examples of the alkylphenol type nonionic surfactant include polyoxyethylenealkyl phenyl ethers, polyoxyethylenedialkyl phenyl ethers and polyoxyethylenealkyl phenyl ether-folmalin condensates. Examples of the polyoxyethylene-polyoxypropylene block polymer type nonionic surfactant include polyoxyethylene-polyoxypropylene block polymer, alkylpolyoxyethylene-polyoxypropylene block polymer ethers and alkylphenyl polyoxyethylene-polyoxypropylene block polymer ethers. Examples of the bisphenol type nonionic surfactant include polyoxybisphenyl ethers. Examples of the polyaromatic type nonionic surfactant include polyoxyalkylenebenzyl phenyl ethers and polyoxyalkylenestyryl phenyl ethers. Examples of the silicone type nonionic surfactants include polyoxyethylene ether type silicone surfactants and polyoxyethylene ester type silicone surfactants.

The anionic surfactants are exemplified by sulfate type anionic surfactants, sulfonate type anionic surfactants, phosphate type anionic surfactants and carboxylic acid type anionic surfactants. Examples of the sulfate type anionic surfactant include alkyl sulfates, polyoxyethylenealkyl sulfates, polyoxyethylenealkyl pheny ether sulfates, polyoxystyryl phenyl ether sulfates and polyoxyethylene-polyoxypropylene block polymer sulfates. Examples of the sulfonate type anionic surfactant include paraffin sulfonates, dialkyl sulfosuccinates, alkylbenzenesulfonates, monoalkylnaphthalenesulfonates, dialkylnaphthalenesulfonates, naphthalenesulfonate-formalin condensates, alkyl diphenyl ether disulfonates and polyoxyethylenealkyl phenyl ether sulfonates. Examples of the phosphate type anionic surfactant include polyoxyethylenealkyl ether phosphate, polyoxyethylenemonoalkyl phenyl ether phosphate, polyoxyethylenedialkyl phenyl ether phosphate, polyoxyethylenestyryl phenyl ether phosphate, polyoxyethylene-polyoxypropylene block polymer phosphate and alkyl phosphate. Examples of the carboxylic acid type anionic surfactant include sodium salts of fatty acid, potassium salts of fatty acid, ammonium of fatty acid, N-methylsarcosinate, sodium salts of resin acid and potassium salts of resin acid.

The cationic surfactants are exemplified by ammonium type cationic surfactants and benzalkonium type cationic surfactants. Examples of the ammonium type cationic surfactant include alkyl trimethyl ammonium chloride, methyl polyoxyethylenealkyl ammonium chloride, alkyl N-methylpyridinium bromide, mono or dialkylmethylated ammonium chloride and alkylpentamethylpropylenediamine chloride. Examples of the benzalkonium type cationic surfactant include alkyl dimethyl benzalkonium chloride, benzetonium chloride and octylphenoxyethoxyethyl dimethyl benzylammonium chloride.

The zwitter ionic surfactants are exemplified by betain type zwitter ionic surfactants. Examples of the betain type zwitter ionic surfactant include dialkyl diaminoethyl betain and alkyl dimethyl benzyl betain. When the surfactant is utilized, the amount is usually 0.1 to 20% by weight, preferably 1 to 10% by weight in the present composition.

The anti-foaming agents are exemplified by silicone type anti-foaming agents such as Antifoam C (commercial name of Dow Corning), Antifoam CE (commercial name of Dow Corning), TSA 730 (commercial name of Toshiba Silicone), TSA 731 (commercial name of Toshiba Silicone), TSA 732 (commercial name of Toshiba Silicone) and YMA 6509 (commercial name of Toshiba Silicone); and fluorinated type anti-foaming agents such as Fluowet PL80 (commercial name of Clariant). When the anti-foaming agent is utilized, the amount is usually 0.001 to 3% by weight in the present composition.

The anti-freezing agents are exemplified by water-soluble glycols such as propylene glycol. When the anti-freezing agent is utilized, the amount is usually 0.5 to 30% by weight, preferably 1 to 20% by weight, more preferably 5 to 10% by weight, in the present composition.

The preservatives are exemplified by p-hydroxybenzoate esters, salicylic acid derivatives and isothiazolin-3-one derivatives (e.g. Biohope L (commercial name of K-I Chemical)). When the preservative is utilized, the amount is usually 0.01 to 5% by weight, preferably 0.05 to 3% by weight, more preferably 0.1 to 1% by weight, in the present composition.

The composition of the present invention optionally contains the other insecticide, acaricide, nematocide, fungicide, herbicide, plant growth regulator, insect growth regulator, fertilizer, soil-improving agent, synergist, adjuvant and so on.

The production method of the composition of the present invention is explained below.

When the composition of the present invention is capsule suspension or capsule suspoemulsion, microcapsules are prepared. The microcapsulation methods are well known and exemplified by interfacial polymerization method, In situ method, phase separation (coacervation) method and liquid evaporation method.

Said microcapsulation method and kind of wall substance are suitably selected in view of the object. Herein, the present compound can be microcapsulated as it is or after dissolved or dispersed in the present solvent in advance.

The capsule suspension of the present composition can be produced by preparing an aqueous dispersion of microcapsules by using water containing the present dispersant by the above-mentioned microcapsulation method and then, if necessary, mixing it with a thickner solution prepared separately containing viscosity-adjusting agent, anti-foaming agent, anti-freezing agent, preservative and so on.

The capsule suspoemulsion of the present composition can be produced by preparing an aqueous dispersion of microcapsules by using water dissolving the present dispersant and making the present solid or liquid compound microcapsulated in advance by the above-mentioned microcapsulation method, emulsifying the present solvent therein and then, if necessary, mixing it with a thickner solution prepared separately containing viscosity-adjusting agent, anti-foaming agent, anti-freezing agent, preservative and so on.

The suspoemulsion of the present composition can be produced, for example, by dissolving the present dispersant in water, adding the present compound, the present solvent, further optionally auxiliaries such as viscosity-adjusting agent, anti-foaming agent, anti-freezing agent and preservative thereto, mixing them and then pulverizing, dispersing and emulsifying them simultaneously by wet-pulverizing means using a media such as glass bead and zirconia. It is decided by the kinds of the present compound, the present solvent and the present dispersant whether the present compound exists in the droplet of the present solvent or in the aqueous phase. A solvent in which the present solid or semi-solid compound is not substantially dissolved is utilized for the present solvent. Further, a solvent which can dissolve the present compound may be used in an amount less than the solubility of the present compound. Furthermore, the suspoemulsion of the present composition also can be produced by preparing an emulsion in which the present solvent is emulsified and a suspension in which the present compound that is solid is suspended separately and then mixing them, by pulverizing and dispersing the present solid compound in an emulsion prepared in advance in which the present solvent is emulsified, or by emulsifying the present solvent in a suspension prepared in advance in which the present solid compound is pulverized and dispersed.

The emulsion of the present composition can be produced as follows. When the present compound is solid or semi-solid at ordinary temperature, it is produced by dissolving the present compound in the present solvent in advance and emulsifying and dispersing the solution in water containing the present dispersant, further optionally viscosity-adjusting agent, anti-foaming agent, anti-freezing agent, preservative and so on. When the present compound is liquid at ordinary temperature, it is produced by mixing the present solvent with the present compound in advance and emulsifying and dispersing the solution in water containing the present dispersant, further optionally viscosity-adjusting agent, anti-foaming agent, anti-freezing agent, preservative and so on. The present dispersant can be added little by little at the emulsifying or dispersing process.

In the production methods, a technique emulsifying and dispersing a solution (hereinafter, referred to as the present solution) prepared by dissolving the present compound in the present solvent or mixing the present compound with the present solvent is exemplified by mechanical dispersion method and phase conversion method.

The present mechanical dispersion method is a technique for emulsifying and dispersing the present solution in water by giving a high mechanical shear stress to liquid consisting of two layers of the present solution and water. Typical examples of the mechanical dispersion method include (1) a method for emulsifying and dispersing by stirring liquid consisting of two layers of the present solution and the water containing the present dispersant at high speed, (2) a method for emulsifying and dispersing by jetting liquid consisting of two layers of the present solution and the water containing the present dispersant into water out of the fine nozzle at high speed, and having a collision with a plate, (3) a method for emulsifying and dispersing by making liquid consisting of two layers of the present solution and the water containing the present dispersant pass through a small clearance and (4) a method for emulsifying and dispersing liquid consisting of two layers of the present solution and the water containing the present dispersant by ultrasonic waves.

The dispersing machine used for the mechanical dispersion method is, for example, planet stirrer for the above-mentioned method (1), Gaulin homogenizer for the above-mentioned method (2) and colloid mill for the above-mentioned method (3).

When the present composition is produced, one of the above-mentioned production method can be selected by studying totally easiness of dispersing liquid consisting of two layers of the present solution and the water containing the present dispersant, viscosity of the dispersing system, amount of the formulation and the other production steps.

The present phase conversion method is a technique for emulsifying and dispersing the present solution in water by preparing a water-in-oil emulsion and then converting the phases to make oil-in-water emulsion.

In the production of the present composition, the volume median diameter of the prepared droplets depends on production conditions such as mechanical shear stress, concentration of the present dispersant and so on. The production conditions are decided to make the volume median diameter of the prepared droplets usually 0.1-50µm, preferably 0.3-40µm, more preferably 0.5-30µm, further more preferably 2-25µm in view of efficacy and stability.

The present composition is applied of 1 to 1,000g, preferably 50 to 500g, per 1 hectare at the dosage of the present compound that is an active ingredient and 10 to 10,000 liters per 1 hectare at the application amount, after diluted with water, though the dosage and application amount depend on weather condition, application time, application method, soil condition, objective pest and so on. The ranges are mentioned above; nevertheless the dosage and application amount can be increased or decreased according to application time, application place, kind of pests, degree of damage and so on.

Further, the present composition can be subjected to aerial application by helicopter, plane or radio-controlled helicopter after diluted with water.

When the present composition is used, the other insecticide, acaricide, nematocide, fungicide, herbicide, plant growth regulator, insect growth regulator, fertilizer, soil-improving agent, synergist, adjuvant and so on may be added and used, if necessary.

Examples of the pest controlled by the present composition include Hemiptera pests such as planthoppers [e.g. small brown planthopper (*Laodelphax striatellus*), brown planthopper (*Nilaparvata lugens*) and white backed rice planthopper (*Sogatella furcifera*)], leafhoppers [e.g. green rice leafhopper (*Nephotettix cincticeps*) and, green rice leafhopper (*Nephotettix virescens*)], aphids (Aphididae), stink bugs, whiteflies (Aleyrodidae), scales, lace bugs (Tingidae) and suckers (Psyllidae); Lepidoptera pests such as Pyralidae [e.g. rice stem borer (*Chilo suppressalis*), rice leafroller (*Cnaphalocrosic medinalis*), European corn borer (*Ostrinia nubilalis*), bluegrass webworm (*Parapediasia teterrella*), cotton leafroller (*Notarcha derogata*) and Indean meal moth (*Plodia interpunctella*)], Noctuidae [e.g. tobacco cutworm (*Spodoptera litura*), beet armyworm (*Spodoptera exigua*), Egyptian cotton leafworm (*Spodoptera littoralis*), rice armyworm (*Pseudalitia separata*), cabbage armyworm (*Mamestra brassicae*), black cutworm (*Agrotis ipsilon*), *Trichoplusia spp*., *Heliothis spp.* and *Helicoverpa spp*.], Pieridae [e.g. common cabbageworm (*Pieris rapae crucivora*), *Adoxophyes spp*., oriental fruit moth (*Grapholita molesta*) and codling moth (*Cydia pomonella*)], Carposinidae [e.g. peach fruit moth (*Carposina niponensis*)], Lyonetiidae [e.g. *Lyonetia spp*.], Lymantriidae [e.g. *Lymantria spp.* and *Euproctis spp*.], Yponameutidae[e.g. diamondback moth (*Plutella xylostella*)], Gelechiidae [e.g. pink bollworm (*Pectinophora gossypiella*)], Arctiidae [e.g. fall webworm (*Hyphantria cunea*)], Tineidae [e.g. casemaking clothes moth (*Tinea translucens*) and webbing clothes moth (*Tineola bisselliella*)]; Diptera pests such as *Culex spp.* [e.g. common mosquito *(Culex pipiens pallens*) and *Culex tritaeniorhynchus*], *Aedes spp.* [e.g. yellow fever mosquito (*Aedes aegypti*) and *Aedes albopictus*], *Anopheles spp.* [e.g. *Anopheles sinensis],* midges (Chironomidae), Muscidae [e.g. housefly *(Musca domestica*) and false housefly (*Muscina stabulans*)], Calliphoridae, Sarcophagidae, little housefly (*Fannia canicularis),* Anthomyiidae [e.g. seedcorn maggot (*Delia platura*) and onion maggot (*Delia antiqua*)], fruit flies (Tephritidae), vinegar flies (Drosophilidae), Psychodidae, Tabanidae, Simulidae and stable flies (Stomoxyidae); Coleoptera pests such as corn rootworms [e.g. western corn rootworm (*Diabrotica virgifera*) and southern corn rootworm (*Diabrotica undecimpunctata howardi*)], scarabs (Scarabaeidae) [e.g. cupreous chafer (*Anomala cuprea*) and soybean beetle (*Anomala rufocuprea*)], weevils (Curculionidae) [e.g. maize weevil (*Sitophilus zeamais*), rice water weevil (*Lissorhoptrus oryzophilus*) and azuki-bean weevil], darkling beetles (Tenebrionidae) [e.g. yellow mealworm (*Tenebrio molitor*) and red flour beetle (*Tribolium castaneum*)], leaf beetles (Chrysomelidae) [e.g. striped flea beetle (*Phyllotreta striolata*) and cucurbit leaf beetle (*Aulacophora femoralis*)], Anobiidae, *Epilachna spp.* [e.g. twenty-eight-spotted ladybird (*Epilachna vigintioctopunctata*)], powderpost beetles (Lyctidae), false powderpost beetles (Bostrychidae), Cerambycidae and robe beetle (*Paederus fuscipes*); Dictyoptera pests such as German cockroach (*Blattella germanica),* smokybrown cockroach (*Periplaneta fuliginosa*), American cockroach (*Periplaneta americana*), brown cockroach (*Periplaneta brunnea*) and oriental cockroach (*Blatta orientalis*); Thysanoptera pests such as *Thrips palmi,* western flower thrips (*Flankliniella occidentalis*), flower thrips (*Flankliniella intonsa*) and *Thrips tabaci*; Hymenoptera pests such as ants (Formicidae), hornets (Vespidae), Bethylidae and sawflies (Tenthredinidae) [e.g. cabbage sawfly (*Athalia rosae ruficornis*)]; Orthoptera pests such as mole crickets (Gryllotalpidae) and grasshoppers (Acrididae); Siphonaptera pests such as human fly (*Pulex irritans*); Anoplura pests such as human body louse (*Pediculus humanus*) and crab louse (*Pthirus pubis*); Isoptera pests such as *Reticulitermes speratus* and *Coptotermes formosanus*; Acarina pests such as plant parasitic mites [e.g. two-spotted spider mite (*Tetranychus urticae*), citrus red mite *(Panonycus citri*), carmine spider mite *(Tetranychus cinnabarinus*) and European red mite (*Panonychus ulmi*)], animal parasitic ticks [e.g. Boophilus microplus] and house dust mites.

The present invention is explained in detail by formulation examples and test examples below. The present invention is not restricted to the following examples.

### Formulation example 1

One hundred grams (100g) of Compound (A) 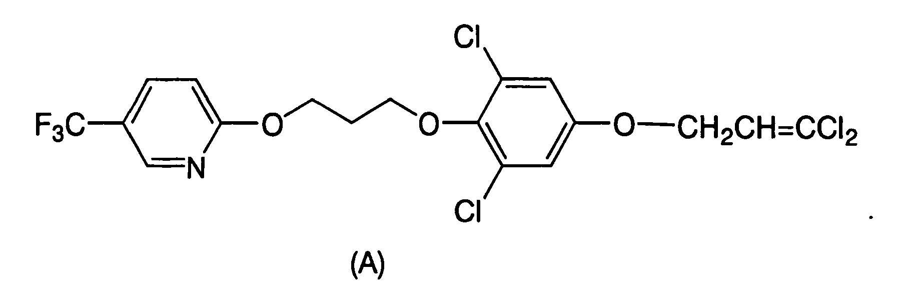 100g of IP Solvent 2835 (isoparaffin solvent manufactured by Idemitsu Petrochemical) and 100g of Vinycizer 40 (ester solvent manufactured by Kao Corp.) were mixed homogeneously to prepare a solution. The solution was added to 320g of an aqueous solution of 6.25% by weight of Gohsenol GL-05 [polyvinyl alcohol (surface tension of 1% by weight of aqueous solution: 45 dyne/cm) manufactured by The Nippon Synthetic Chemical Industry] containing 2g of TSA 730 (anti-foaming agent manufactured by Toshiba Silicone), and stirred and dispersed at 4500 rpm at ordinary temperature for 5 minutes by T. K. Autohomomixer (homogenizer manufactured by Tokushukikakogyo) to give a slurry. To the obtained slurry, 380g of an aqueous solution containing 1g of xanthan gum, 2g of aluminum silicate and 1g of Biohope L (preservative manufactured by Kei-Ai Kasei) to give an oil-in-water emulsified composition containing 10% by weight of Compound (A) having a volume median diameter of 10µm.

### Formulation example 2

One hundred grams (100g) of Compound (A), 130g of Napthtesol M (paraffin solvent manufactured by Nippon Petrochemicals) and 70g of Vinycizer 40 (ester solvent manufactured by Kao Corp.) as a solvent were mixed homogeneously to prepare a solution. The solution was added to 320g of an aqueous solution of 6.25% polyvinyl alcohol (the same as used in Formulation example 1) containing 2g of TSA 730, and stirred and dispersed at 4500 rpm at ordinary temperature for 5 minutes by T. K. Autohomomixer to give a slurry. To the obtained slurry, 380g of an aqueous solution containing 1.2g of xanthan gum, 2.4g of aluminum silicate and 1g of Biohope L to give an oil-in-water emulsified composition containing 10% by weight of Compound (A) having a volume median diameter of 10µm.

### Formulation example 3

One hundred grams (100g) of Compound (A) and 200g of Hisol SAS-296 (aromatic solvent of Nippon Oil Corp.) were mixed homogeneously to prepare a solution. The solution was added to 320g of an aqueous solution of 6.25% polyvinyl alcohol (the same as used in Formulation example 1) containing 2g of TSA 730, and stirred and dispersed at 4500 rpm at ordinary temperature for 5 minutes by T. K. Autohomomixer to give a slurry. To the obtained slurry, 380g of an aqueous solution containing 1.5g of xanthan gum, 3g of aluminum silicate, 1g of Biohope L and 50g of propylene glycol to give an oil-in-water emulsified composition containing 10% by weight of Compound (A) having a volume median diameter of 10µm.

### Formulation example 4

One hundred grams (100g) of Compound (A), 145g of Napthtesol M (paraffin solvent manufactured by Nippon Petrochemicals) and 55g of Hisol SAS-296 (aromatic solvent of Nippon Oil Corp.) were mixed homogeneously to prepare a solution. The solution was added to 320g of an aqueous solution of 6.25% polyvinyl alcohol (the same as used in Formulation example 1) containing 2g of TSA 730, and stirred and dispersed at 4500 rpm at ordinary temperature for 5 minutes by T. K. Autohomomixer to give a slurry. To the obtained slurry, 380g of an aqueous solution containing 1.2g of xanthan gum, 2.4g of aluminum silicate and 3g of Biohope L to give an oil-in-water emulsified composition containing 10% by weight of Compound (A) having a volume median diameter of 10µm.

### Formulation example 5

One hundred grams (100g) of Compound (A) and 200g of isopropyl myristate were mixed homogeneously to prepare a solution. The solution was added to 320g of an aqueous solution of 6.25% polyvinyl alcohol (the same as used in Formulation example 1) containing 2g of TSA 730, and stirred and dispersed at 4500 rpm at ordinary temperature for 5 minutes by T. K. Autohomomixer to give a slurry. To the obtained slurry, 380g of an aqueous solution containing 1.5g of xanthan gum, 3g of aluminum silicate and 1g of Biohope L to give an oil-in-water emulsified composition containing 10% by weight of Compound (A) having a volume median diameter of 10µm. Formulation example 6

One hundred grams (100g) of Compound (A), 130g of Napthtesol M (paraffin solvent manufactured by Nippon Petrochemicals) and 70g of Vinycizer 40 (ester solvent manufactured by Kao Corp.) were mixed homogeneously to prepare a solution. The solution was added to 320g of an aqueous solution of 6.25% polyvinyl alcohol (the same as used in Formulation example 1) containing 2g of TSA 730, and stirred and dispersed at 4500 rpm at ordinary temperature for 5 minutes by T. K. Autohomomixer to give a slurry. To the obtained slurry, 380g of an aqueous solution containing 0.5g of xanthan gum, 1.0g of aluminum silicate and 1g of Biohope L to give an oil-in-water emulsified composition containing 10% by weight of Compound (A) having a volume median diameter of 10µm.

### Test example 1 Insecticidal test against tobacco cutworm

An application solution for the test was prepared by diluting the present composition obtained in Formulation examples 1-5 with water to make the concentration to 1.25, 2.5 and 5ppm, and adding adjuvant (Tokusei Rino manufactured by Nihon Noyaku) thereto in an amount of 1/5000 of the dilution. Each of the application solution was applied to a cabbage seedling planted in a polyethylene cup in a sufficient amount (about 50ml per 2 seedlings) with a spray gun. After drying it in the room, a leaf was cut off and put into a polyethylene cup with ten 3-instar larvae of tobacco cutworm *(Spodoptera litura*). The cup was covered and kept at 25°C. After 4 days, the numbers of alive and dead insects was examined and calculated LC₅₀ value (concentration of 50% dead). The results are given in Table 1.

**Table 1**

| Tested formulations | LC₅₀ (ppm) |
|---|---|
| Formulation example 1 | 1.35 |
| Formulation example 2 | 2.13 |
| Formulation example 3 | 1.93 |
| Formulation example 4 | 1.73 |
| Formulation example 5 | 2.05 |

### Test example 2 Residual insecticidal effect test against tobacco cutworm

An application solution for the test was prepared by diluting the present composition obtained in Formulation examples 2, 3 and 6 with water to make the concentration to 1.25, 2.5 and 5ppm, and adding adjuvant (Tokusei Rino manufactured by Nihon Noyaku) thereto in an amount of 1/5000 of the dilution. Each of the application solution was applied to a cabbage seedling planted in a polyethylene cup in a sufficient amount (about 50ml per 2 seedlings) with a spray gun. After drying it in the room, the seedling was kept in a greenhouse. A leaf was cut off on the treated day and after 6 days, and put into a polyethylene cup with ten 3-instar larvae of tobacco cutworm *(Spodoptera litura*). The cup was covered and kept at 25°C. After 4 days, the numbers of alive and dead (including moribund) insects was examined and the mortality was calculated . The results are given in Table 2.

**Table 2**

| Tested formulations | Application Concentration (ppm) | Mortality (%) | |
|---|---|---|---|
| | | Treated day | After 6 days |
| Formulation example 2 | 12.5 | 100 | 73 |
| Formulation example 3 | 12.5 | 100 | 87 |
| Formulation example 6 | 12.5 | 100 | 100 |

### Industrial Applicability

The present invention provides insecticidal/acaricidal compositions.

## Claims

1. An insecticidal/acaricidal composition which comprises
(a) a dihalopropene compound given by the formula: 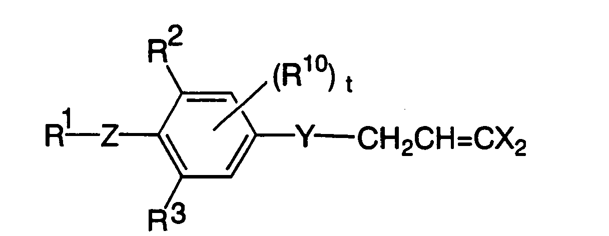 wherein, Z represents an oxygen atom, sulfur atom or NR⁴ group (wherein R⁴ is a hydrogen atom or C1-3 alkyl group), Y represents an oxygen atom, sulfur atom or NH group, X's independently represent a chlorine or bromine atom, R², R³ and R¹⁰ independently represent a halogen atom, C1-3 haloalkyl group or C1-3 alkyl group, t represents an integer of 0 to 2 and R¹ represents Q₁, Q₂, Q₃, Q₄, Q₅, Q₆ or Q₇ of formula: 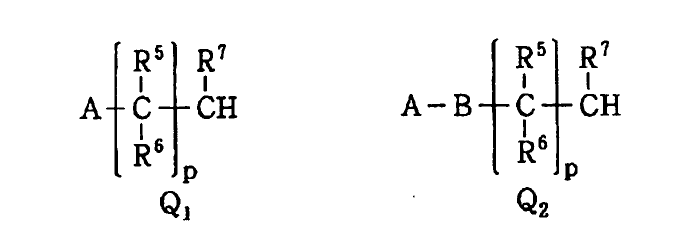 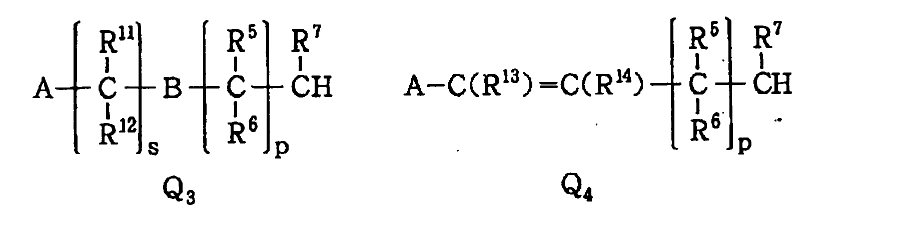 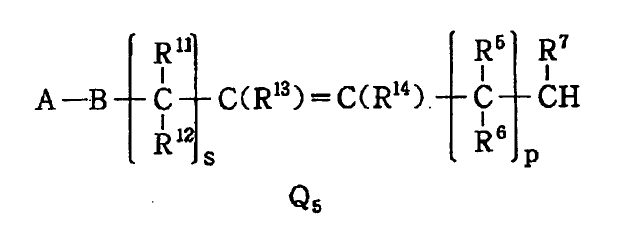 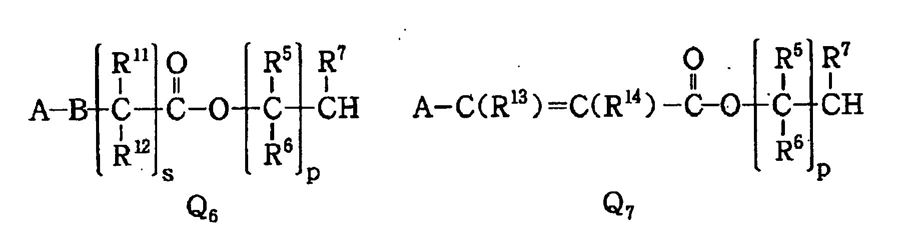 wherein, A represents an optionally substituted heterocyclic group, B represents an oxygen atom, S(O)_{q} group, NR⁹ group, C(=G¹)G² group or G¹C(=G²) group, q represents an integer of 0 to 2, R⁹ represents a hydrogen atom, acetyl group or C1-3 alkyl group, G¹ and G² independently represent an oxygen or sulfur atom, R⁵, R⁶, R⁷, R¹¹ and R¹² independently represent a hydrogen atom, C1-3 alkyl group or trifluoromethyl group, R¹³ and R¹⁴ independently represent a hydrogen atom, C1-3 alkyl group, trifluoromethyl group or halogen atom, p represents an integer of 0 to 6 and s represents an integer of 1 to 6,
(b) a dispersant having 40 dyne/cm or more of surface tension at 1% by weight of its aqueous solution,
(c) an organic compound which is liquid at ordinary temperature and has 1 g or less solubility against 100g of water at 20°C, and
(d) water,
wherein the component (b) is polyvinyl alcohol and the amount of the component (c) is 0.5 to 50 times of the component (a).

2. A composition according to claim 1, wherein the content of the component (a) is 0.1 to 40% by weight, and the content of the component (b) is 0.1 to 20% by weight.

3. A composition according to claim 1, which comprises further a viscosity-adjusting agent.

4. A composition according to claim 2, which comprises further 0.01 to 10% by weight of a viscosity-adjusting agent.

5. A composition according to claim 1-4, wherein the component (a) is 3,5-dichloro-4-(3-(5-trifluoromethyl-2-pyridyloxy)propyloxy)-1-(3,3-dichloro-2-propenyloxy)benzene.

6. A method for controlling insects/acarina, which comprises applying an insecticidal/acaricidal effective amount of the composition described in any of claims 1-5 to a place where the insects/acarina inhabit or will inhabit.

7. Use of the composition described in any of claims 1-5 for insecticidal/ acaricidal composition.

## Patentansprüche

1. Insektizide/acarizide Zusammensetzung, welche umfaßt
(a) eine Dihalogenpropenverbindung, die gegeben ist durch die Formel: 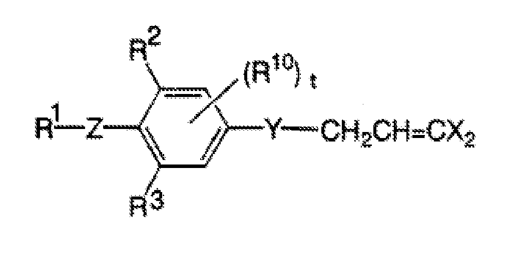 worin Z ein Sauerstoffatom, ein Schwefelatom oder eine NR⁴-Gruppe darstellt (wobei R⁴ ein Wasserstoffatom oder eine C1-3-Alkylgruppe ist), Y ein Sauerstoffatom, ein Schwefelatom oder eine NH-Gruppe darstellt, X unabhängig ein Chlor- oder ein Bromatom darstellt, R², R³ und R¹⁰ unabhängig voneinander ein Halogenatom, eine C1-3-Halogenalkylgruppe oder eine C1-3-Alkylgruppe darstellen, t eine ganze Zahl von 0 bis 2 darstellt und R¹ Q₁, Q₂, Q₃, Q₄, Q₅, Q₆ oder Q₇ der folgenden Formel darstellt: 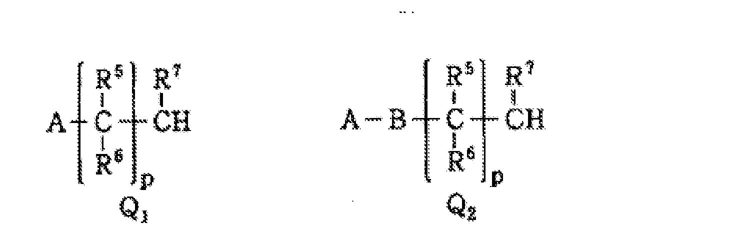 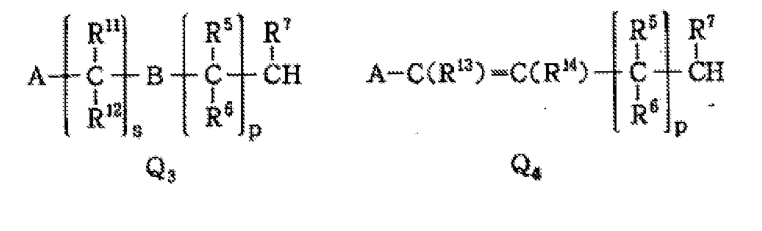 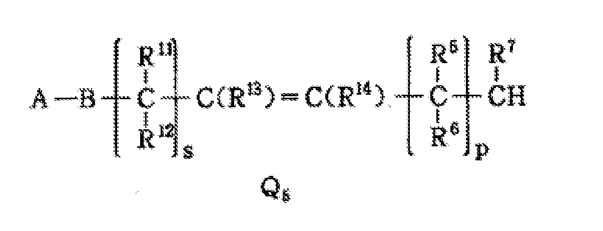 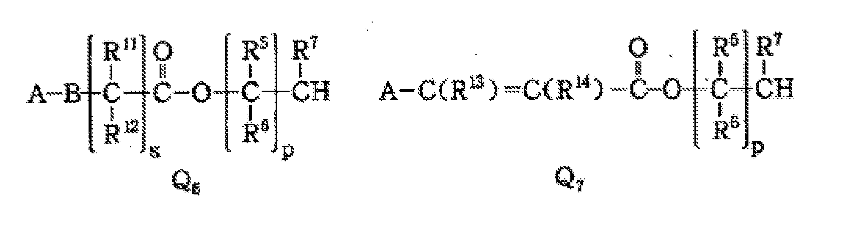 wobei A eine optional substituierte heterozyklische Gruppe darstellt, B ein Sauerstoffatom, eine S(O)_{q}-Gruppe, eine NR⁹-Gruppe, C(=G¹)G²-Gruppe oder eine G¹C(=G²)-Gruppe, q eine ganze Zahl von 0 bis 2 darstellt, R⁹ ein Wasserstoffatom, eine Acetylgruppe oder eine C1-3-Alkylgruppe darstellt, G¹ und G² unabhängig voneinander ein Sauerstoff- oder ein Schwefelatom darstellen, R⁵, R⁶, R⁷, R¹¹ und R¹² unabhängig voneinander ein Wasserstoffatom, eine C1-3-Alkylgruppe oder eine Trifluormethylgruppe darstellen, R¹³ und R¹⁴ unabhängig voneinander ein Wasserstoffatom, eine C1-3-Alkylgruppe, eine Trifluormethylgruppe oder ein Halogenatom darstellen, p eine ganze Zahl von 0 bis 6 darstellt und s eine ganze Zahl von 1 bis 6 darstellt,
(b) ein Dispersionsmittel, das bei 1 Gewichtsprozent seiner wäßrigen Lösung eine Oberflächenspannung von 40 Dyne/cm oder mehr besitzt,
(c) eine organische Verbindung, die bei üblicher Temperatur flüssig ist und die bei 20°C eine Löslichkeit von 1g oder weniger gegenüber 100g Wasser besitzt, und
(d) Wasser,
wobei der Bestandteil (b) Polyvinylalkohol ist und die Menge des Bestandteils (c) das 0,5- bis 50-fache derjenigen des Bestandteils (a) ist.

2. Zusammensetzung nach Anspruch 1, wobei der Gehalt von Bestandteil (a) 0,1 bis 40 Gewichtsprozent beträgt und der Gehalt des Bestandteils (b) 0,1 bis 20 Gewichtsprozent beträgt.

3. Zusammensetzung nach Anspruch 1, die ferner ein viskositätseinstellendes Mittel umfaßt.

4. Zusammensetzung nach Anspruch 2, die ferner weiter 0,01 bis 10 Gewichtsprozent eines viskositätseinstellenden Mittels umfaßt.

5. Zusammensetzung nach Anspruch 1 bis 4, wobei der Bestandteil (a) 3,5-Dichlor-4-(3-(5-Trifluormethyl-2-Pyridyloxy)-Propyloxy)-1-(3,3-Dichlor-2-Propenyloxy)-Benzol ist.

6. Verfahren zur Beeinflussung von Insekten/Milben, welches die Anwendung einer insektizid/acarizid-wirksamen Menge der in einem der Ansprüche 1 bis 5 beschriebenen Zusammensetzung an einem Ort umfaßt, wo die Insekten/Milben siedeln oder siedeln werden.

7. Verwendung der in einem der Ansprüche 1 bis 5 beschriebenen Zusammensetzung als insektizide/acarizide Zusammensetzung.

## Revendications

1. Composition insecticide/acaricide qui comprend
(a) un composé dihalopropène donné par la formule : 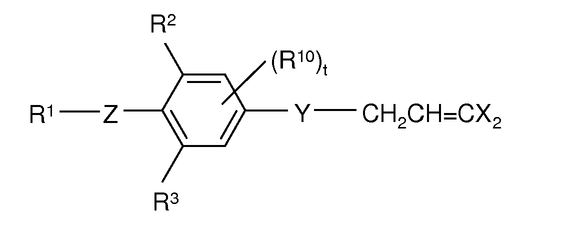 dans laquelle, Z représente un atome d'oxygène, un atome de soufre ou un groupe NR⁴ (où R⁴ est un atome d'hydrogène ou un groupe alkyle en C₁-C₃), Y représente un atome d'oxygène, un atome de soufre ou un groupe NH, les X représentent indépendamment un atome de chlore ou de brome, R², R³ et R¹⁰ représentent indépendamment un atome d'halogène, un groupe haloalkyle en C₁-C₃ ou un groupe alkyle en C₁-C₃, t représente un nombre entier de 0 à 2 et R¹ représente Q₁, Q₂, Q₃, Q₄, Q₅, Q₆ ou Q₇ des formules : 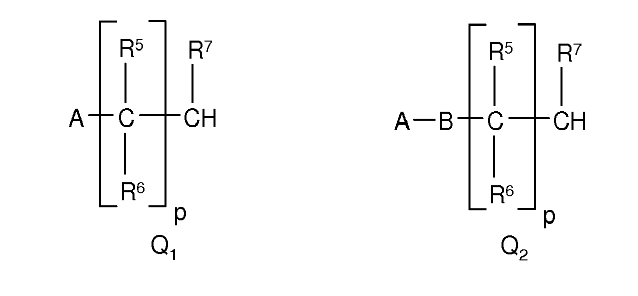 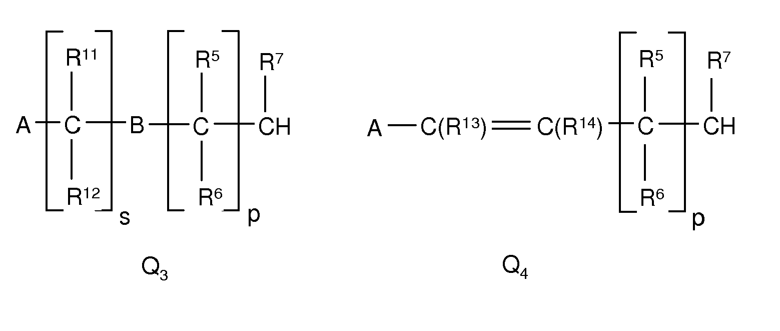 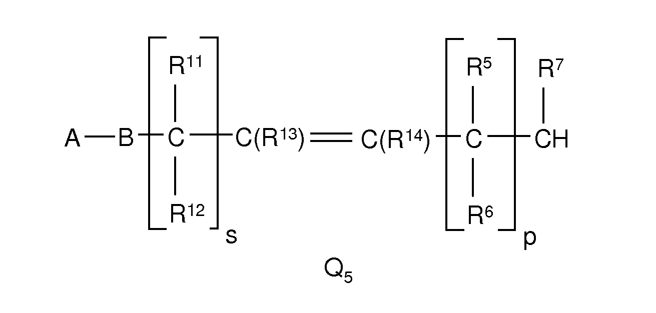 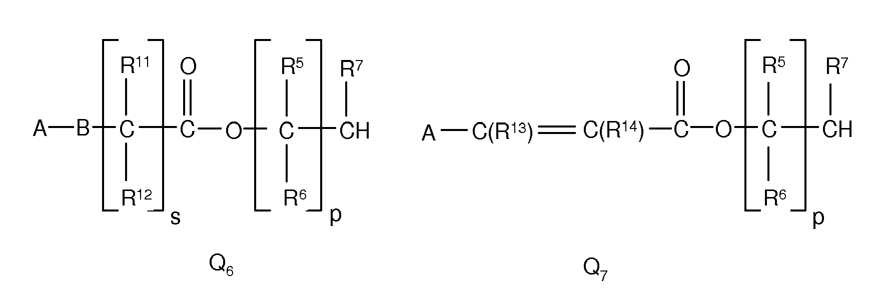 dans lesquelles, A représente un groupe hétérocyclique facultativement substitué, B représente un atome d'oxygène, le groupe S(O)_{q}, le groupe NR⁹, le groupe C(=G¹)G² ou le groupe G¹C(=G²), q représente un nombre entier de 0 à 2, R⁹ représente un atome d'hydrogène, un groupe acétyle ou un groupe alkyle en C₁-C₃, G¹ et G² représentent indépendamment un atome d'oxygène ou de soufre, R⁵, R⁶, R⁷, R¹¹ et R¹² représentent indépendamment un atome d'hydrogène, un groupe alkyle en C₁-C₃ ou un groupe trifluorométhyle, R¹³ et R¹⁴ représentent indépendamment un atome d'hydrogène, un groupe alkyle en C₁-C₃, un groupe trifluorométhyle ou un atome d'halogène, p représente un nombre entier de 0 à 6 et s représente un nombre entier de 1 à 6,
(b) un dispersant ayant une tension superficielle de 40 dynes/cm ou supérieur à 1 % en poids de sa solution aqueuse,
(c) un composé organique qui est liquide à température ambiante et qui présente 1 g ou moins de solubilité par rapport à 100 g d'eau à 20°C, et
(d) de l'eau,
dans laquelle le constituant (b) est un poly(alcool vinylique) et la quantité du constituant (c) est de 0,5 à 50 fois celle du constituant (a).

2. Composition selon la revendication 1, dans laquelle la teneur du constituant (a) est de 0,1 à 40 % en poids et la teneur du constituant (b) est de 0,1 à 20 % en poids.

3. Composition selon la revendication 1, laquelle comprend de plus un agent d'ajustement de la viscosité.

4. Composition selon la revendication 2, laquelle comprend de plus de 0,01 à 10 % en poids d'un agent d'ajustement de la viscosité.

5. Composition selon la revendication 1-4, dans laquelle le constituant (a) est le 3,5-dichloro-4-(3-(5-trifluorométhyl-2-pyridyloxy)-propyloxy)-1-(3,3-dichloro-2-propényloxy)benzène.

6. Procédé pour contrôler les insectes/acariens, lequel comprend l'application d'une quantité efficace insecticide/acaricide de la composition décrite dans l'une quelconque des revendications 1-5 sur un endroit où les insectes/acariens habitent ou habiteront.

7. Utilisation de la composition décrite dans l'une quelconque des revendications 1-5 pour une composition insecticide/acaricide.
